# EUROPÄISCHE PATENTSCHRIFT

(11) **EP 1 074 333 B1**
(45) Veröffentlichungstag und Bekanntmachung des Hinweises auf die Patenterteilung: **23.04.2008**
(21) Anmeldenummer: 00116097.7
(22) Anmeldetag: 27.07.2000
(51) Int. Cl.: B23Q 1/01, B23Q 1/26, B23Q 39/02, B23B 31/22, B23B 31/30

(54) **Drehmaschine mit zwei Werkzeugträgersystemen**
Lathe with two tool carrier systems
Tour avec deux systèmes de support d'outils

(30) Priorität: 03.08.1999 DE 19936468
(43) Veröffentlichungstag der Anmeldung: 07.02.2001
(73) Patentinhaber: Index-Werke GmbH & Co. KG Hahn & Tessky, 73730 Esslingen (DE)
(72) Erfinder: Grossmann, Walter, 73666 Baltmannsweiler (DE)
(74) Vertreter: Hoeger, Stellrecht & Partner Patentanwälte

(56) Entgegenhaltungen:
- EP-A- 0 585 690
- DD-A- 279 429
- DE-A- 3 127 130
- DE-A- 3 824 572

## Beschreibung

Die Erfindung betrifft eine Drehmaschine umfassend ein Maschinengestell, mindestens eine am Maschinengestell angeordnete und um eine Spindelachse drehbare Werkstückspindel, zwei relativ zum Maschinengestell in einer Z-Richtung parallel zur Spindelachse bewegbare und Werkzeugträger für mehrere Werkzeuge umfassende Werkzeugträgersysteme die auf derselben Seite der Spindelachse angeordnet sind und, von denen jedes jeweils unabhängig vom anderen Werkzeugträgersystem mit einem eigenen Schlittensystem am Maschinengestell in der Z-Richtung, auf einer Bahn bewegbar geführt ist, die kollisions begründend zum anderen Werkzeugträgesystem verläuft. Siehe, z.B. DE 3 127 130.

Derartige Drehmaschinen sind aus dem Stand der Technik bekannt, wobei diese Drehmaschinen entweder nicht zum Bearbeiten von Wellen mit zwei Werkzeugträgersystemen geeignet sind und/oder die beiden Werkzeugträgersysteme nicht optimal gleichzeitig einsetzbar sind.

Der Erfindung liegt daher die Aufgabe zugrunde, eine Drehmaschine der eingangs beschriebenen Art derart zu verbessern, dass eine Wellenbearbeitung mit optimalem Einsatz zweier Werkzeugträgersysteme möglich ist.

Diese Aufgabe wird bei einer Drehmaschine der eingangs beschriebenen Art erfindungsgemäß dadurch gelöst, daß jedes Schlittensystem einen an dem Z-Schlitten geführten X-Schlitten aufweist, welcher auf einer dem jeweils anderen Werkzeugträgersystem zugewandten Seite des Z-Schlittens angeordnet ist, und dass eine Führungsebene, in welcher X-Führungen für die Bewegung des X-Schlettens relativ zum Z-Schlitten liegen, quer zur Spindelachse verläuft.

Eine besonders günstige Anordnung des X-Schlittens sieht vor, daß eine Führungsebene, in welcher die X-Führungen für die Bewegung des X-Schlittens relativ zum Z-Schlitten liegen, auf einer dem jeweils anderen Werkzeugträgersystem zugewandten Seite eines dem jeweils anderen Werkzeugträgersystem nächstliegenden Führungselements des Z-Schlittens liegt.

Mit dieser Lösung ist sichergestellt, daß die Führungsebene für den X-Schlitten so weit in Richtung des jeweils anderen Werkzeugträgersystems verlagert ist, daß die X-Führung ohne Behinderung durch die Führungselemente des Z-Schlittens möglichst nahe an die Z-Führung herangeführt werden kann, um eine möglichst stabile Führung der Werkzeuge mittels des X-Schlittens und des Z-Schlittens relativ zum Maschinengestell zu erreichen, welche eine möglichst hohe Präzision der Bearbeitung gewährleistet.

So ist es für eine möglichst stabile Führung des X-Schlittens relativ zum Z-Schlitten besonders günstig, wenn die durch die X-Führungen festgelegte Führungsebene quer zur Spindelachse verläuft, da quer zur Spindelachse ausreichend Raum für eine stabile Ausbildung der Führung zur Verfügung steht, ohne daß hierdurch eine Beschränkung des Aktionsweges der Werkzeugträgersysteme in Z-Richtung entsteht.

Besonders günstig ist es dabei, wenn sich der X-Schlitten eines jeden der Schlittensysteme in Richtung des jeweils anderen Werkzeugträgersystems über einen diesen X-Schlitten führenden Z-Schlitten hinauserstreckt.

Eine besonders günstige Ausführung der Schlittensysteme sieht vor, daß der Z-Schlitten X-Führungen aufweist, welche derart an einem Schlittenkörper desselben angeordnet sind, daß diese dem jeweils anderen Werkzeugträgersystem näher liegen als der jeweilige Schlittenkörper.

Hinsichtlich der Definition der Bewegbarkeit der Werkzeugträgersysteme in Z-Richtung auf einer kollisionsbegründenden Bahn, wäre es beispielsweise denkbar, daß nicht die Schlittensysteme, sondern lediglich die Werkzeugträger auf einer kollisionsbegründenden Bahn bewegbar sind. Da ohnehin Kollisionen der Werkzeugträger zu berücksichtigen sind, ist es, im Hinblick auf eine besonders stabile Führung beider Werkzeugträger konstruktiv günstig, wenn die Schlittensysteme beider Werkzeugträgersysteme in der Z-Richtung auf einer kollisionsbegründenden Bahn bewegbar sind. Die einfachste Realisierungsmöglichkeit hierbei sieht vor, daß die Schlittensysteme auf denselben Führungsbahnen in Z-Richtung bewegbar sind.

Um die Werkzeuge möglichst nahe beieinander positionieren zu können, ist vorzugsweise vorgesehen, daß die Werkzeugträgerköpfe in der ersten Stellung derart ausgerichtet sind, daß deren Werkzeugaufnahmen ein Einsetzen von Werkzeugen zulassen, die sich in einer in einem Schnittpunkt mit der Spindelachse quer zur Spindelachse verlaufenden Fläche erstrecken.

Dadurch, daß Werkzeuge einsetzbar sind, die in einer Fläche liegen, welche im Schnittpunkt mit der Spindelachse quer zu dieser verläuft, besteht die Möglichkeit, mit den Werkzeugträgern der unterschiedlichen Werkzeugträgersysteme möglichst dicht aufeinanderzu zufahren und somit möglichst nahe beieinanderliegend beim Wellendrehen zu arbeiten.

Besonders zweckmäßig ist es hierbei, wenn die sich quer zur Spindelachse erstreckenden Flächen im Schnittpunkt mit der Spindelachse ungefähr parallel zueinander verlaufen.

Um die Werkzeugträgerköpfe möglichst günstig mit Werkzeugen bestücken zu können, ist vorzugsweise vorgesehen, daß der Werkzeugträgerkopf relativ zu dem diesen tragenden Schlittensystem in der ersten Stellung derart angeordnet ist, daß das Schlittensystem einen Freiraum für die sich ungefähr in Richtungen quer zur Spindelachse vom Werkzeugträgerkopf wegerstreckenden Werkzeuge bildet. Dies gilt für mindestens einen der Werkzeugträger der Werkzeugträgersysteme.

Vorzugsweise sind beide Werkzeugträger der Werkzeugträgersysteme in der ersten Stellung derart angeordnet.

Besonders günstig läßt sich dies dann realisieren, wenn der Werkzeugträgerkopf in der ersten Stellung relativ zu dem diesen tragenden Schlittensystem derart positionierbar ist, daß dieser über eine dem jeweils anderen Werkzeugträgersystem nächstliegende Seitenfläche des Schlittensystems in Richtung des anderen Werkzeugträgersystems übersteht. Auch dies gilt noch besser für mindestens einen Werkzeugträgerkopf, vorzugsweise für beide Werkzeugträgerköpfe der beiden Werkzeugträgersysteme.

Um mit der erfindungsgemäßen Drehmaschine nicht nur Wellenbearbeitungen, sondern auch andere Bearbeitungen durchführen zu können, ist vorzugsweise vorgesehen, daß der Spindel gegenüberliegend eine Gegenspindel vorgesehen ist, so daß jedes der Werkzeugträgersysteme mit einer der Spindeln zur Bearbeitung eines Werkstücks zusammenarbeiten kann.

Um insbesondere Vorder- und Rückseitenbearbeitung durchführen zu können ist vorzugsweise vorgesehen, daß die Spindel und die Gegenspindel zur Übergabe von Werkstücken aufeinanderzu bewegbar sind.

Grundsätzlich ist es bei der erfindungsgemäßen Lösung möglich, auch bei in der ersten Stellung stehendem Werkzeugträgerkopf eine Bearbeitung der Werkstücke in der Spindel und der Gegenspindel mit jeweils einem der Werkzeugträgersysteme durchzuführen.

Hierzu sind vorzugsweise Werkzeuge einsetzbar, welche sich in Flächen quer zu der Spindelachse oder beiden Spindelachsen erstrecken.

Um insbesondere jedoch Bearbeitungen auf der Stirnseite der Werkstücke und von sich in die Stirnseite hineinerstreckenden Vertiefungen vornehmen zu können, ist es erforderlich, auch Werkzeuge einzusetzen, welche sich ungefähr parallel zur Spindelachse erstrecken.

Hierzu ist es besonders günstig, wenn mindestens einer der Werkzeugträgerköpfe relativ zu dem diesen tragenden Schlittensystem in einer zweiten Stellung auf einer dem anderen Werkzeugträgersystem abgewandten Seite des Werkzeugträgers steht. In dieser zweiten Stellung lassen sich besonders günstig dann Werkzeuge in dem Werkzeugträgerkopf einsetzen, die sich parallel zur Spindelachse erstrecken.

Insbesondere ist es hierzu günstig, wenn das Schlittensystem im Bereich des Werkzeugträgerkopfes in der zweiten Stellung einen Freiraum für sich ungefähr in Richtung der Spindelachse erstreckende Werkzeuge bildet, die sich dann ausgehend vom jeweiligen Werkzeugträgerkopf entgegengesetzt zum jeweils anderen Werkzeugträgersystem erstrecken können, ohne daß Kollisionen dieser Werkzeuge in beiden Werkzeugträgersystemen miteinander zu befürchten sind.

Besonders günstig ist es hierbei, wenn der Werkzeugträgerkopf in der zweiten Stellung vor einer zur Seite der entsprechenden Spindel gewandten Seite des Schlittensystems steht.

Um den Werkzeugträgerkopf von der ersten Stellung in die zweite Stellung bewegen zu können, sind die unterschiedlichsten Lösungen denkbar. So sieht eine besonders günstige Lösung vor, daß der jeweilige Werkzeugträger relativ zum X-Schlitten derart bewegbar ist, daß der Werkzeugträgerkopf von der ersten Stellung in die zweite Stellung bringbar ist, das heißt, daß das Überführen des Werkzeugträgerkopfes zwischen der ersten Stellung und der zweiten Stellung durch eine Relativbewegung des Werkzeugträgers zum X-Schlitten erfolgt.

Besonders einfach läßt sich eine derartige Bewegung dann realisieren, wenn der Werkzeugträgerkopf durch eine Schwenkbewegung von der ersten Stellung in die zweite Stellung bewegbar ist.

Eine konstruktiv besonders günstige Lösung sieht dabei vor, daß der Werkzeugträger an dem X-Schlitten um eine Achse schwenkbar gelagert ist. Eine derartige Achse ist vorzugsweise eine sich quer zur Spindelachse erstreckende Achse.

Eine besonders bevorzugte Lösung sieht vor, daß diese Achse sich senkrecht zur Spindelachse erstreckt und eine sogenannte B-Achse der Werkzeugmaschine darstellt.

Der Werkzeugträger kann prinzipiell beliebig ausgebildet sein, solange er die Möglichkeit schafft, mehrere Werkzeuge in Einsatz zu bringen. Ein derartiger Werkzeugträger könnte beispielsweise im einfachsten Fall ein sogenannter Linearwerkzeugträger sein.

Eine besonders günstige Form eines Werkzeugträgers sieht vor, daß der Werkzeugträger als Werkzeugrevolver ausgebildet ist.

Besonders günstig ist es dabei, wenn der Werkzeugrevolver einen Revolverkopf aufweist, welcher auf einer Seite eines Revolvergehäuses angeordnet ist.

Vorzugsweise ist ein derartiger Revolverkopf um eine Revolverachse gegenüber dem Revolvergehäuse schwenkbar.

Diese Revolverachse liegt günstigerweise so, daß der Revolverkopf gegenüber dem Revolvergehäuse um eine Revolverachse schwenkbar ist, die quer zu einer X-Achse der Werkzeugmaschine verläuft.

Dabei könnte die Revolverachse noch eine beliebige Schar von Stellungen um die X-Achse einnehmen. Besonders günstig liegt die Revolverachse dann, wenn sie ungefähr parallel zur Z-Achse verläuft.

Hinsichtlich der Verschwenkbarkeit des Revolverkopfes in die erste und die zweite Stellung ist vorzugsweise vorgesehen, daß das Revolvergehäuse um eine Schwenkachse gegenüber dem X-Schlitten schwenkbar ist.

Vorzugsweise ist dabei die Schwenkachse so ausgerichtet, dass sie quer zur Z-Achse verläuft. Dabei ist vorzugsweise der Revolverkopf durch Schwenken des Revolvergehäuses um die Schwenkachse von der dem anderen Werkzeugträgersystem zugewandten ersten Stellung in die dem anderen Werkzeugträgersystem abgewandte zweite Stellung bringbar.

Weitere Merkmale und Vorteile der Erfindung sind Gegenstand der nachfolgenden Beschreibung sowie der zeichnerischen Darstellung eines Ausführungsbeispiels.

In der Zeichnung zeigen:
- Fig. 1: eine Frontansicht eines Ausführungsbeispiels einer erfindungsgemäßen Drehmaschine mit teilweise weggebrochener Spindel bei in einer ersten Stellung stehenden Werkzeugträgerköpfen;
- Fig. 2: eine Draufsicht in Richtung des Pfeils B in Fig. 1;
- Fig. 3: eine Frontansicht ähnlich Fig. 1 des Ausführungsbeispiels bei in einer zweiten Stellung stehenden Werkzeugträgerköpfen;
- Fig. 4: eine Draufsicht entsprechend Fig. 2 bei in der zweiten Stellung stehenden Werkzeugträgerköpfen und
- Fig. 5: einen Schnitt längs Linie 5-5 in Fig. 2.

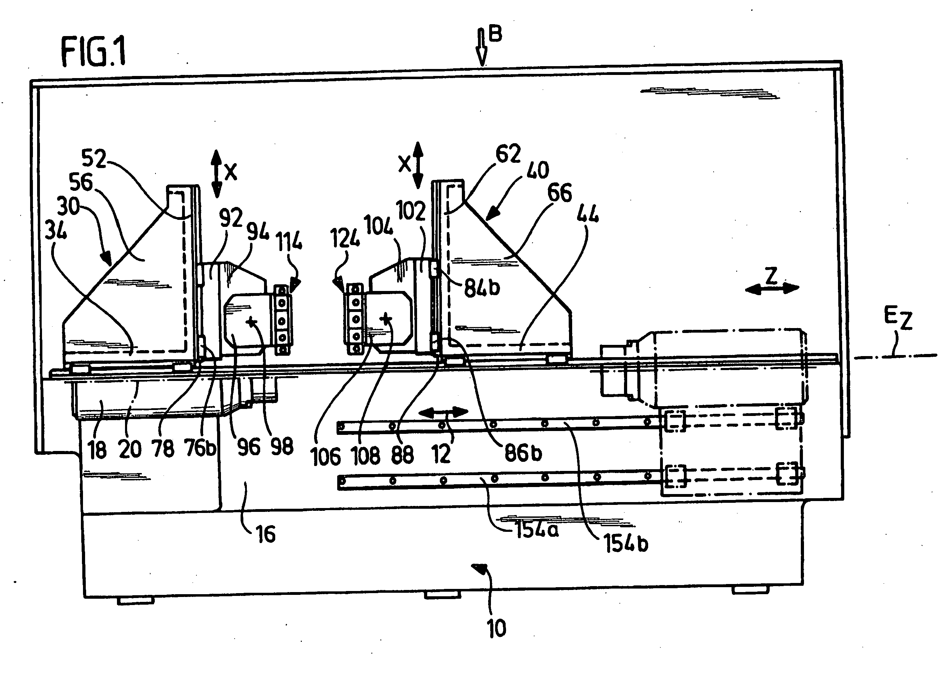

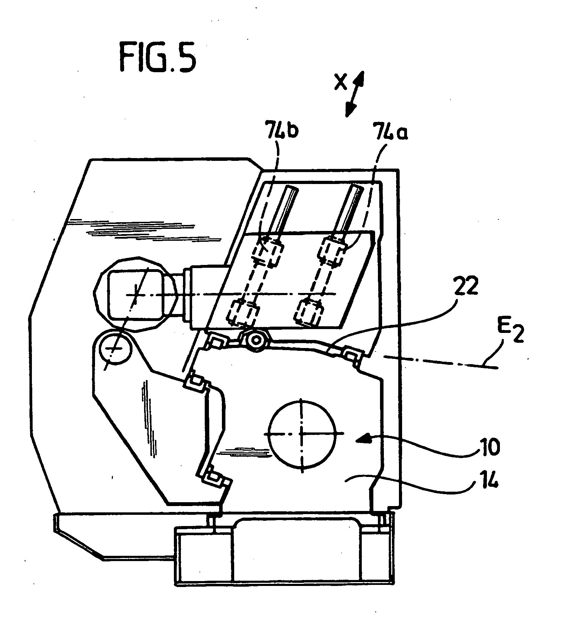

Ein Ausführungsbeispiel einer erfindungsgemäßen Drehmaschine, dargestellt in den Fig. 1 bis 5, umfaßt ein Maschinengestell 10, welches einen sich in einer Längsrichtung 12 erstreckenden Grundkörper 14 umfaßt, der an einer Frontseite 16 in einem Endbereich eine erste Werkstückspindel 18 trägt, die um eine zur Längsrichtung 12 ungefähr parallele Spindelachse 20 drehbar ist, wobei die erste Werkstückspindel 18 vorzugsweise fest mit dem Grundkörper 14 verbunden ist.

Ferner sind auf einer Oberseite 22 des Grundkörpers 14 zwei im Abstand und parallel zueinander verlaufende Z-Führungen 24a, b vorgesehen, welche sich im wesentlichen über die gesamte Länge des Grundkörpers 14 und parallel zur Längsrichtung 12 erstrecken und somit parallel zur Spindelachse 20 verlaufen.

Auf diesen Z-Führungen 24a, b sind zwei Werkzeugträgersysteme 30, 40 angeordnet, die jeweils einen unmittelbar auf den Z-Führungen 24a, b sitzenden und von diesen geführten Z-Schlitten 32, 42 umfassen.

Die Z-Schlitten 32, 42 weisen ein Basisteil 34, 44 auf, an welchem Führungselemente 36a, 38a, 36b, 38b bzw. 46a, 48a, 46b, 48b angeordnet sind, wobei die Führungselemente 36a und 38a sowie 46a und 48a auf der Z-Führung 24a geführt sind und jeweils im Abstand voneinander am Basisteil 34 bzw. 44 angeordnet sind, während die Führungselemente 36b, 38b bzw. 46b bzw. 48b an der Z-Führung 24b geführt und jeweils im Abstand voneinander an dem entsprechenden Basisteil 34 bzw. 44 gehalten sind.

Die Z-Schlitten 32, 42 umfassen ferner eine sich über das Basisteil erhebende und jeweils dem anderen Werkzeugträgersystem 40 bzw. 30 zugewandt angeordnetes Trägerteil 52 bzw. 62, das sich im wesentlichen quer zum jeweiligen Basisteil 34 bzw. 44 erstreckt und außerdem quer zu den Z-Führungen 24a, 24b. Dieses Trägerteil 52 bzw. 62 ist vorzugsweise noch über Versteifungen 54, 56 bzw. 64, 66 gegenüber dem jeweiligen Basisteil 34, 44 im wesentlichen verformungssteif fixiert, wobei die Versteifungen 54, 56 bzw. 64, 66 sich vorzugsweise quer zum Basisteil 34 und zum entsprechenden Trägerteil 52 bzw. zum Basisteil 44 und zum entsprechenden Trägerteil 62 erstrecken, so daß insgesamt ein vorzugsweise einstückiger, das jeweilige Basisteil 34 bzw. 44, das jeweilige Trägerteil 52 bzw. 62 und die Versteifungen 54, 56 bzw. 64, 66 umfassender Schlittenkörper 50 bzw. 60 entsteht.

An dem Trägerteil 52 bzw. 62 sind jeweils auf der dem anderen Werkzeugträgersystem 40 bzw. 30 zugewandten Seite 58 bzw. 68, welche sich quer zu den Z-Führungen 24a bzw. 24b erstreckt, zwei parallel zueinander angeordnete X-Führungen 70a, 70b bzw. 80a, 80b vorgesehen, die sich in Richtung quer zu einer durch die den Z-Führungen 24a, b festgelegten Ebene E_{Z} erstrecken.

Vorzugsweise liegen die beiden X-Führungen 70a, 70b und 80a, 80b jeweils in einer Ebene E1 bzw. E2, welche senkrecht zu den Z-Führungen 24a, 24b und senkrecht zur Spindelachse 20 verläuft.

An den parallel zueinander verlaufenden X-Führungen 70a, 70b bzw. 80a, 80b ist ein X-Schlitten 72 bzw. 82 mittels Führungselementen 74a, 74b und 76a, 76b bzw. 84a, 84b bzw. 86a, 86b in X-Richtung bewegbar geführt, wobei sich vorzugsweise die X-Führungen 70a, 70b jeweils im wesentlichen ausgehend von einer Unterkante 78, 88 des Z-Schlittenkörpers 50, 60 über das Trägerteil 52 bzw. 62 erstrecken, so daß der X-Schlitten 72 bzw. 82 bis möglichst nahe an die Z-Führungen 24a, b herangefahren werden kann.

Die X-Schlitten 72, 82 umfassen ein Basisteil 92 bzw. 102, auf welchem ein Gehäuse 94 bzw. 104 fest montiert ist. An diesem Gehäuse 94 bzw. 104 ist ein Revolvergehäuse 96 bzw. 106 um eine Schwenkachse 98 bzw. 108 schwenkbar gehalten ist.

Jedes Revolvergehäuse 96 bzw. 106 ist Teil eines Werkzeugrevolvers 100 bzw. 110, welcher einen am Revolvergehäuse 96 bzw. 106 um eine Revolverachse 112 bzw. 122 drehbaren Revolverkopf 114 bzw. 124 aufweist, der mit umfangsseitigen Werkzeugaufnahmen 116 bzw. 126 versehen ist, die sich in radialer Richtung zur Revolverachse 112 bzw. 122 im Revolverkopf 114 bzw. 124 erstrecken.

Wie in Fig. 1 und 3 bzw. 2 und 4 dargestellt, ist durch Schwenken des Revolvergehäuses 96 bzw. 106 um die Schwenkachse 98 bzw. 108 relativ zum Gehäuse 94 bzw. 104 der jeweilige Revolverkopf 114 bzw. 124 jeweils in mindestens zwei unterschiedliche vorzugsweise um 180° gegeneinander verdrehte Stellungen bringbar.

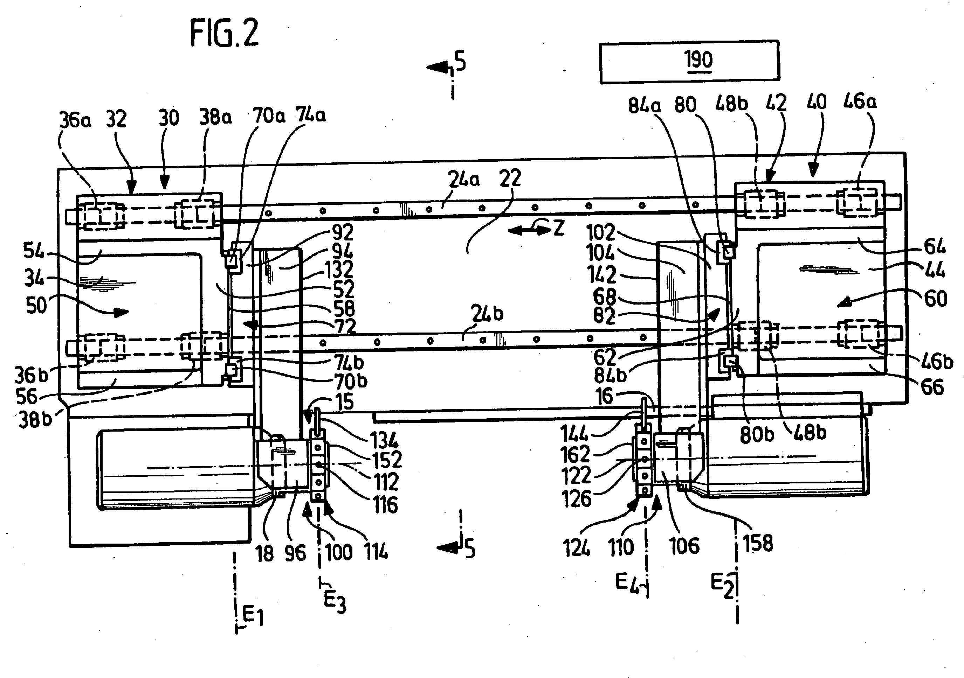

In einer ersten Stellung der Revolverköpfe 114 und 124 (Fig. 1 und 2) stehen diese so, daß sie einander zugewandt sind und durch Verfahren der Werkzeugträgersysteme 30 bzw. 40 in Z-Richtung so weit aufeinander zu bewegbar sind, daß die Revolverköpfe 114 bzw. 124 nahezu aneinander anstoßen. Dies ist dadurch möglich, daß die jeweiligen die Z-Schlitten 32 bzw. 42 und X-Schlitten 72 bzw. 82 umfassende Schlittensysteme relativ zu den Werkzeugrevolvern 100 bzw. 110 so angeordnet sind, daß bei in der ersten Stellung stehenden Werkzeugrevolvern 100 bzw. 110 dem jeweils gegenüberliegenden Werkzeugträgersystem 40 bzw. 30 nächstliegende und zugewandte Seiten 132 und 142 der Schlittensysteme 32, 72 bzw. 42, 82 so stehen, daß die Revolverköpfe 114 bzw. 124 in Richtung des jeweils anderen Werkzeugträgersystems 40 bzw. 30 vorzugsweise im Abstand vor diesen Seiten 132 bzw. 142 stehend positioniert sind.

Damit liegen in den Werkzeugaufnahmen 116 bzw. 126 eingesetzte Werkzeuge 134 bzw. 144 in Ebenen E3 bzw. E4, die die Revolverachsen 112, bzw. 122 im wesentlichen senkrecht schneiden, und somit auch die Spindelachse 20 der Werkzeugspindel 18 senkrecht schneiden, wobei die Ebenen E3, E4 jeweils ebenfalls noch im Abstand vor den einander zugewandten Seiten 132 bzw. 142 der Schlittensysteme 32, 72 bzw. 42, 82 liegen.

Folglich besteht im Bereich der Ebenen E₃, E₄ um den jeweiligen Revolverkopf 114 bzw. 124 azimutal umlaufend ein Freiraum 150 bzw. 160, der es ermöglicht bei den sich radial zur Revolverachse 112 bzw. 122 erstreckenden Werkzeugen 134 bzw. 144 ein Drehen der jeweiligen Revolverköpfe 114 bzw. 124 um die Revolverachse 112 bzw. 122 durchzuführen, ohne daß die Werkzeuge mit dem X-Schlitten 72 bzw. 82 kollidieren.

Darüber hinaus sind dadurch, daß die Ebnen E3 und E4 vorzugsweise parallel zueinander verlaufen, die Revolverköpfe so weit in Richtung aufeinander zu verfahrbar, bis deren dem Revolvergehäuse 96 bzw. 106 abgewandte Stirnseiten 152 bzw. 162 sich nahezu berühren, ohne daß die in den Revolverköpfen 114 bzw. 124 eingesetzten und sich radial zu den Revolverachsen 112 bzw. 122 erstreckenden Werkzeuge 134 bzw. 144 miteinander kollidieren.

Folglich können die Werkzeuge 134 und 144 nahe beieinanderliegend eingesetzt werden, so daß insbesondere mit den Werkbeugen 134 und 144 der beiden Revolverköpfe 114 und 124 eine Wellenbearbeitung mit zwei gleichzeitig arbeitenden Werkzeugen 134, 144 möglich ist, wobei beispielsweise der Spindel 18 gegenüberliegend ein Reitstock oder, wie in Fig. 1 bis 4 dargestellt, eine als Reitstock eingesetzte Gegenspindel 158 angeordnet ist, wenn eine Wellenbearbeitung auf der erfindungsgemäßen Drehmaschine erfolgen soll.

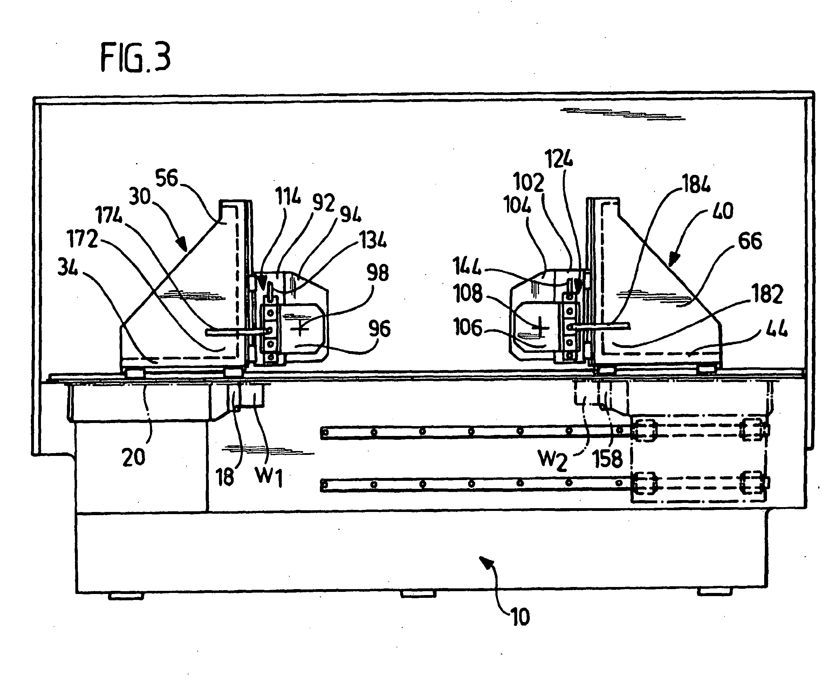

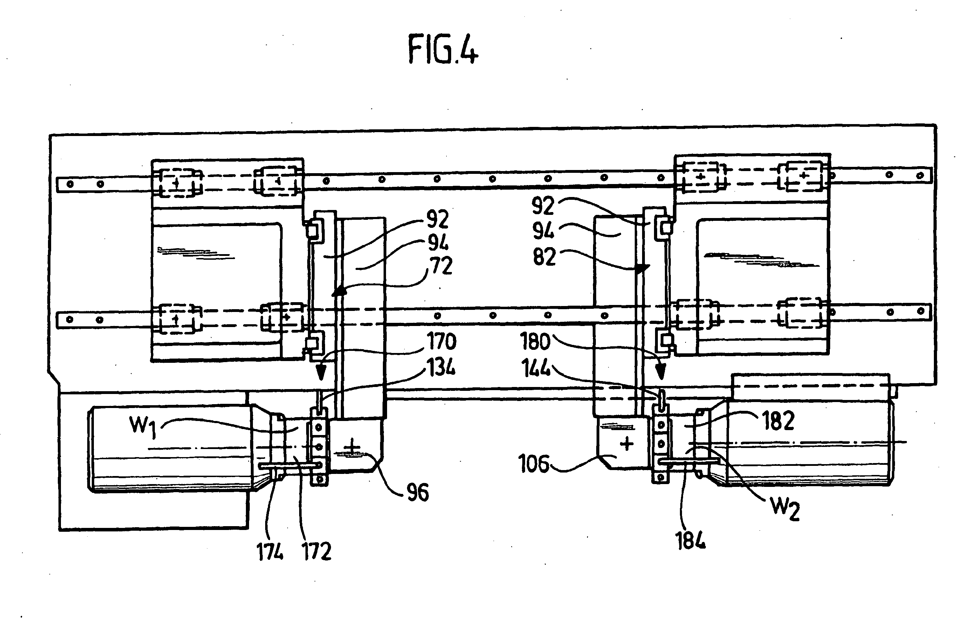

Darüber hinaus sind die Revolverköpfe 114, 124 in eine in Fig. 3 und 4 dargestellte Stellung bringbar, in welcher die Revolverköpfe 114, 124 auf einer dem jeweils anderen Werkzeugträgersystem 40, 30 abgewandten Seite des jeweiligen Revolvergehäuses 96, 106 stehen. In dieser Stellung sind die Revolverköpfe 114, 124 zwischen dem jeweiligen Schlittensystem 32, 72 bzw. 42, 82 und der jeweiligen Spindel 18 bzw. 158 angeordnet, wobei in diesem Fall die Spindel 158 eine übliche Gegenspindel zur Spindel 18 darstellt und nicht mehr als Reitstock ausgebildet sein kann.

Ferner ist die Gegenspindel 158 in Z-Richtung verfahrbar auf Z-Führungen 154a, 154b geführt, die an der Frontseite 16 des Grundkörpers 14 gehalten sind.

In dieser Stellung der Revolverköpfe 114 bzw. 124 ist zwischen dem jeweiligen Schlittensystem 32,72 bzw. 42, 82 und dem jeweiligen Revolverkopf 114 bzw. 124 ein den jeweiligen Revolverkopf 114 bzw. 124 umgebender Freiraum 170 bzw. 180 vorgesehen, der es erlaubt, in den Werkzeugaufnahmen 116 bzw. 126 radial zur Revolverachse 112 bzw. 122 sich erstreckende Werkzeuge 134 bzw. 144 einzusetzen.

Ergänzend dazu ist aber auch in der zweiten Stellung vor einer jeweiligen Stirnseite 152 bzw. 162 des jeweiligen Revolverkopfs 114 bzw. 124, die gegenüberliegend dem jeweiligen Revolvergehäuse 96 bzw. 106 angeordnet ist ein Freiraum 172 bzw. 182 geschaffen, welcher zwischen dem jeweiligen Schlittensystem 32, 72 bzw. 42, 82 und der entsprechenden Spindel 18 bzw. 158 liegt und es erlaubt, in die Werkzeugaufnahmen sich parallel zur jeweiligen Revolverachse 112 bzw. 122 erstreckende Werkzeuge 174 bzw. 184 einzusetzen, welche beispielsweise als lange Bohrstangen ausgebildet sein können und es erlauben, Bohrungen in das in der jeweiligen Spindel 18 zw. 158 eingesetzte Werkstück W1 bzw. W2 einzubringen.

Vorzugsweise ist das Werkstück W2 das nach Bearbeitung in der Spindel 18 mit den Werkzeugen 134, 174 des Revolverkopfes 114 der Gegenspindel 158 übergebene Werkstück W1, wobei durch die Werkzeuge 144, 184 des Revolverkopfes 124 eine rückseitige Bearbeitung erfolgt, während beim Werkstück W1 eine vorderseitige Bearbeitung erfolgt.

Zur Durchführung sämtlicher Bearbeitungen sind erfindungsgemäß die Werkzeugträgersysteme 30 und 40 unabhängig durch eine Steuerung 190 steuerbar, wobei eine Steuerung der Z-Bewegung durch Bewegen des Z-Schlittens 32 bzw. 42, der X-Bewegung durch Steuern des X-Schlittens 72 bzw. 82 erfolgt.

Gleichzeitig sind durch die Steuerung 190 auch noch die Revolverköpfe 114 bzw. 124 um ihre Revolverachsen 112 bzw. 122 gesteuert drehbar, so daß durch die Steuerung das gewünschte Werkzeug 134 bzw. 144 in Einsatz bringbar ist.

Für die Wellenbearbeitung ist vorzugsweise noch die Spindel 18 in bekannter Weise ansteuerbar.

Dabei ist bei der Steuerung der Werkzeugträgersysteme 30 und 40 zu beachten, daß eine Kollision der Revolverköpfe 114, 124 vermieden wird, so daß die Steuerung 190 stets die Position des einen Werkzeugträgersystems 30 relativ zur Position des anderen berücksichtigen muß, da sich beide in Z-Richtung auf einer kollisionsbegründenden Bahn bewegen.

Darüber hinaus ist vorteilhafterweise vorgesehen, daß auch die Verfahrbarkeit der bei der Wellenbearbeitung als Reitstock wirkenden Gegenspindel 158 in Z-Richtung längs der Führungen 154a und 154b dazu eingesetzt werden kann, die Gegenspindel 158 für ihre Reitstockfunktion exakt zu positionieren.

Bei der ebenfalls bei der erfindungsgemäßen Drehmaschine möglichen Vor- und Rückseitenbearbeitung, bei welcher beispielsweise das Werkstück W1 in der Spindel 18 auf seiner Vorderseite bearbeitet wird, dann durch Verfahren der Gegenspindel 158 in Z-Richtung längs der Führungen 154a, 154b der Gegenspindel 158 übergeben wird, die dann wieder in Z-Richtung in eine beispielsweise in Fig. 4 dargestellte endseitige Stellung zurückfährt, sind vorzugsweise ebenfalls die Werkzeugträgersysteme 30 und 40 unabhängig voneinander durch die Steuerung 190 steuerbar in der beschriebenen Art und Weise, um unabhängig voneinander in der Spindel 18 und der Gegenspindel 158 die einzelnen Bearbeitungsschritte vorzunehmen.

Ferner sind vorzugsweise die Spindel 18 und die Gegenspindel 158 C-achsengesteuert, um eine korrekte Übergabe des Werkstücks W1 von der Spindel 18 in die Gegenspindel 158 vornehmen zu können und um andererseits möglichst umfassende Bearbeitungen der Werkstücke W1 und W2 durchführen zu können.

Bei der Vor- und Rückseitenbearbeitung können die Revolverköpfe 114 bzw. 124 sowohl in der ersten als auch in der zweiten Stellung eingesetzt werden. Allerdings ist für den Fall, dass sich längs der Revolverachsen 112 bzw. 122 erstreckende Werkzeuge 174 bzw. 184 eingesetzt werden, die zweite Stellung vorteilhafter, da in dieser der Freiraum 172 bzw. 182 vor der jeweiligen Stirnseite 152 bzw. 162 des entsprechenden Revolverkopfes 114 bzw. 124 zur Verfügung steht, der ein weitgehend kollisionsfreies Positionieren der Werkzeugträgersysteme 30 bzw. 40 erlaubt, während in der ersten Stellung bei der Bewegung der Werkzeugträgersysteme 30 bzw. 40 in Z-Richtung aufgrund der kollisionsbegründenden Bahn der Z-Schlitten 32 bzw. 42 auch noch die Erstreckung der sich über die jeweilige Stirnseite 152 bzw. 162 des entsprechenden Revolverkopfes 114 bzw. 124 hinaus erstreckenden Werkzeuge 174 bzw. 184 bei der Steuerung der Bewegung in Z-Richtung berücksichtigt werden müsste, um Kollisionen zu erhalten. Dagegen ist in der zweiten Stellung der Revolverköpfe 114 bzw. 124 lediglich zu berücksichtigen, dass die Steuerung der Z-Schlitten 32 bzw. 42 dergestalt erfolgt, dass die einander zugewandten Seiten 132 bzw. 142 der Schlittensysteme 32, 72 bzw. 42, 82 nicht kollidieren.

Das Überführen des jeweiligen Revolverkopfes 114 bzw. 124 von der ersten Stellung in die zweite Stellung oder von der zweiten Stellung in die erste Stellung kann im einfachsten Fall manuell erfolgen, so dass der jeweilige Revolver 100 bzw. 110 an dem Gehäuse 94 bzw. 104 fixierbar und drehbar gelagert ist und durch manuelles Drehen des gesamten Revolvers 100 bzw. 110 der Revolver 100 bzw. 110 von der ersten Stellung in die zweite Stellung oder umgekehrt überführbar und in dieser Stellung wieder fixierbar ist.

Alternativ dazu ist es aber auch denkbar, einen Antrieb vorzusehen, so dass mittels der Steuerung 190 ein Schwenken des jeweiligen Revolvers 100 bzw. 110 oder beider Revolver 100 und 110 von der ersten in die zweite Stellung und umgekehrt durchführbar ist.

Besonders vorteilhaft ist es dabei, wenn die Schwenkbewegung um die Schwenkachse 98 bzw. 108 entsprechend einer durch die Steuerung 190 numerisch gesteuerten B-Achse erfolgt, so dass die Revolverköpfe 114 bzw. 124 nicht nur in der ersten und der zweiten Stellung positionierbar sind, sondern auch in beliebigen Zwischenstellungen entsprechend dem jeweils vorgesehenen Bearbeitungsvorgang.

## Patentansprüche

1. Drehmaschine umfassend ein Maschinengestell (10), mindestens eine am Maschinengestell (10) angeordnete und um eine Spindelachse (20) drehbare Werkstückspindel (18), zwei relativ zum Maschinengestell(10) in einer Z-Richtung parallel zur Spindelachse (20) bewegbare und Werkzeugträger für mehrere Werkzeuge umfassende Werkzeugträgersysteme (30, 40), die auf derselben Seite der Spindelachse (20) angeordnet sind und, von denen jedes jeweils unabhängig vom anderen Werkzeugträgersystem (40, 30) mit einem eigenen Schlittensystem (32, 72; 42, 82) am Maschinengestell (10) in der Z-Richtung, auf einer Bahn bewegbar geführt ist, die kollisionsbegründend zum anderen Werkzeugträgersystem (40, 30) verläuft
**dadurch gekennzeichnet, dass** jedes Schlittensystem (32, 72; 42, 82) einen an dem Z-Schlitten (32, 42) geführten X-Schlitten (72, 82) aufweist, welcher auf einer dem jeweils anderen Werkzeugträgersystem (40; 30) zugewandten Seite des Z-Schlittens (32; 42) angeordnet ist, und dass eine Führungsebene (E₁, E₂), in welcher X-Führungen für die Bewegung des X-Schlittens (72, 82) relativ zum Z-Schlitten (32, 42) liegen, quer zur Spindelachse (20) verläuft.

2. Drehmaschine nach Anspruch 1, **dadurch gekennzeichnet, dass** die Führungsebene (E1, E2), auf einer dem jeweils anderen Werkzeugträgersystem (40; 30) zugewandten Seite eines dem jeweils anderen Werkzeugträgersystem (40; 30) nächstliegenden Führungselement (38; 48) des Z-Schlittens (32, 42) liegt.

3. Drehmaschine nach einem der voranstehenden Ansprüche, **dadurch gekennzeichnet, dass** jedes Werkzeugträgersystem (30, 40) einen Werkzeugträgerkopf (114; 124) aufweist, welcher gegenüber dem jeweiligen Schlittensystem (32, 72; 42, 82) bewegbar und dadurch in einer ersten Stellung so positionierbar ist, daß dieser die dem jeweils anderen Werkzeugträgersystem (40, 30) nächstliegende Baugruppe des jeweiligen Werkzeugträgersystems (30, 40) darstellt.

4. Drehmaschine nach einem der voranstehenden Ansprüche, **dadurch gekennzeichnet, dass** sich der X-Schlitten (72, 82) eines jeden der Schlittensysteme (32, 72; 42, 82) in Richtung des jeweils anderen Werkzeugträgersystems (40, 30) über einen diesen X-Schlitten (72, 82) führenden Z-Schlitten (32, 42) hinaus erstreckt.

5. Drehmaschine nach einem der voranstehenden Ansprüche, **dadurch gekennzeichnet, dass** der Z-Schlitten (32, 42) X-Führungen(70, 80) aufweist, welche derart an einem Schlittenkörper (50, 60) desselben angeordnet sind, dass diese dem jeweils anderen Werkzeugträgersystem (40, 30) näher liegen als der jeweilige Schlittenkörper (50, 60).

6. Drehmaschine nach einem der voranstehenden Ansprüche, **dadurch gekennzeichnet, dass** die Schlittensysteme (32, 72; 42, 82) der Werkzeugträgersysteme (30, 40) in der Z-Richtung auf einer kollisionsbegründenden Bahn bewegbar sind.

7. Drehmaschine nach Anspruch 6, **dadurch gekennzeichnet, dass** die Schlittensysteme (32, 72; 42, 82) auf denselben Führungen (24) in Z-Richtung bewegbar sind.

8. Drehmaschine nach einem der voranstehenden Ansprüche, **dadurch gekennzeichnet, dass** die Werkzeugträgerköpfe (114, 124) in der ersten Stellung derart ausgerichtet sind, dass deren Werkzeugaufnahmen (116, 126) ein Einsetzen von Werkzeugen (134, 144) zulassen, die sich in einer in einem Schnittpunkt mit der Spindelachse (20) quer zur Spindelachse (20) verlaufenden Fläche (E₃, E₄) erstrecken.

9. Drehmaschine nach Anspruch 8, **dadurch gekennzeichnet, dass** die sich quer zur Spindelachse (20) erstreckenden Flächen (E₃, E₄) im Schnittpunkt mit der Spindelachse (20) ungefähr parallel zueinander verlaufen.

10. Drehmaschine nach einem der voranstehenden Ansprüche, **dadurch gekennzeichnet, dass** der Werkzeugträgerkopf (114, 124) relativ zu dem diesen tragenden Schlittensystem (32, 72; 42, 82) in der ersten Stellung derart angeordnet ist, dass das Schlittensystem (32, 72; 42, 82) einen Freiraum für sich ungefähr in Richtung quer zur Spindelachse (20) vom Werkzeugträgerkopf (114, 124) weg erstreckende Werkzeuge (134, 144) bildet.

11. Drehmaschine nach einem der voranstehenden Ansprüche, **dadurch gekennzeichnet, dass** mindestens einer der Werkzeugträgerköpfe (114, 124) relativ zu dem diesen tragenden Schlittensystem (32, 72; 42, 82) in der ersten Stellung derart positionierbar ist, dass dieser über eine dem jeweils anderen Werkzeugträgersystem (40; 30) nächstliegenden Seitenfläche (132, 142) des Schlittensystems (32, 72; 42, 82) in Richtung des anderen Werkzeugträgersystems (40; 30) übersteht.

12. Drehmaschine nach Anspruch 11, **dadurch gekennzeichnet, dass** beide Werkzeugträgerköpfe (114, 124) relativ zu dem diesen tragenden Schlittensystem (32, 72; 42, 82) derart positionierbar sind, dass diese über eine dem jeweils anderen Werkzeugträgersystem (40; 30) nächstliegende Seitenfläche (132, 142) des Schlittensystems (32, 72; 42, 82) in Richtung des anderen Werkzeugträgersystems (40, 30) überstehen.

13. Drehmaschine nach einem der voranstehenden Ansprüche, **dadurch gekennzeichnet, dass** an dem Maschinengestell (10) eine der Spindel (18) gegenüberliegend angeordnete Gegenspindel (158) vorgesehen ist.

14. Drehmaschine nach Anspruch 13, **dadurch gekennzeichnet, dass** die Spindel (18) und die Gegenspindel (158) zur Übergabe von Werkstücken (W1, W2) aufeinanderzu bewegbar sind.

15. Drehmaschine nach einem der voranstehenden Ansprüche, **dadurch gekennzeichnet, dass** mindestens einer der Werkzeugträgerköpfe (114, 124) relativ zu dem diesen tragenden Schlittensystem (32, 72; 42, 82) in einer zweiten Stellung auf einer dem anderen Werkzeugträgersystem (40; 30) abgewandten Seite des Werkzeugträgers (100, 110) steht.

16. Drehmaschine nach Anspruch 13, **dadurch gekennzeichnet, dass** das Schlittensystem (32, 72; 42, 82) im Bereich des Werkzeugträgerkopfes (114, 124) einen Freiraum (172, 182) für sich ungefähr in Richtung der Spindelachse (20) erstreckende Werkzeuge bildet.

17. Drehmaschine nach Anspruch 15 oder 16, **dadurch gekennzeichnet, dass** der Werkzeugträgerkopf (114, 124) in der zweiten Stellung vor einer zur Seite der entsprechenden Spindel gewandten Seite des Schlittensystems (32, 72; 42, 82) steht.

18. Drehmaschine nach einem der Ansprüche 13 bis 17, **dadurch gekennzeichnet, dass** der Werkzeugträger (100, 110) relativ zum X-Schlitten (72, 82) derart bewegbar ist, dass der Werkzeugträgerkopf (114, 124) von der ersten Stellung in die zweite Stellung bringbar ist.

19. Drehmaschine nach einem der Ansprüche 13 bis 18, **dadurch gekennzeichnet, dass** der Werkzeugträgerkopf (114, 124) durch eine Schwenkbewegung von der ersten Stellung in die zweite Stellung bringbar ist.

20. Drehmaschine nach Anspruch 19, **dadurch gekennzeichnet, dass** der Werkzeugträger (100, 110) an dem X-Schlitten (72, 82) um eine Achse (98, 108) schwenkbar gelagert ist.

21. Drehmaschine nach einem der voranstehenden Ansprüche, **dadurch gekennzeichnet, dass** der Werkzeugträger als Werkzeugrevolver (100, 110) ausgebildet ist.

22. Drehmaschine nach Anspruch 21, **dadurch gekennzeichnet, dass** jeder Werkzeugrevolver (100, 110) einen Revolverkopf (114, 124) aufweist, welcher auf einer Seite eines Revolvergehäuses (96, 106) angeordnet ist.

23. Drehmaschine nach Anspruch 22, **dadurch gekennzeichnet, dass** jeder Revolverkopf (114, 124) um eine Revolverachse (112, 122) gegenüber dem Revolvergehäuse (96, 106) schwenkbar ist, die quer zu einer X-Achse der Werkzeugmaschine verläuft

24. Drehmaschine nach Anspruch 23, **dadurch gekennzeichnet, dass** die Revolverachse (112, 122) ungefähr parallel zur Z-Achse verläuft.

25. Drehmaschine nach einem der Ansprüche 21 bis 24, **dadurch gekennzeichnet, dass** das Revolvergehäuse (96, 106) um eine Schwenkachse (98, 108), gegenüber dem X-Schlitten (72, 82) schwenkbar ist.

26. Drehmaschine nach Anspruch 25, **dadurch gekennzeichnet, dass** der Revolverkopf (114, 124) durch Schwenken des Revolvergehäuses (96, 106) um die Schwenkachse (98, 108) von der dem anderen Werkzeugträgersystem (40; 30) zugewandten ersten Stellung in die dem anderen Werkzeugträgersystem (40; 30) abgewandte zweite Stellung bringbar ist.

## Claims

1. Lathe comprising a machine frame (10), at least one workpiece spindle (18) arranged on the machine frame (10) and rotatable about a spindle axis (20), two tool carrier systems (30, 40) movable relative to the machine frame (10) in a Z direction parallel to the spindle axis (20) and comprising tool carriers for several tools, said tool carrier systems being arranged on the same side of the spindle axis (20) and each of them being guided independently of the other respective tool carrier system (40, 30) so as to be movable with its own slide system (32, 72; 42, 82) in the Z direction on the machine frame (10) on a path extending to the other tool carrier system (40, 30) in a collision-prone manner, **characterized in that** each slide system (32, 72; 42, 82) has an X slide (72, 82) guided on the Z slide (32, 42) and arranged on a side of the Z slide (32; 42) facing the respectively other tool carrier system (40; 30) and that a guide plane (E₁, E₂), in which X guides for the movement of the X slide (72, 82) relative to the Z slide (32, 42) are located, extends transversely to the spindle axis (20).

2. Lathe as defined in claim 1, **characterized in that** the guide plane (E1, E2) is located on a side of a guide element (38; 48) of the Z slide (32, 42) located closest to the respectively other tool carrier system (40; 30), said side facing the respectively other tool carrier system (40; 30).

3. Lathe as defined in either one of the preceding claims, **characterized in that** each tool carrier system (30, 40) has a tool carrier head (114; 124) movable in relation to the respective slide system (32, 72; 42, 82) and, as a result, being positionable in a first position such that it represents the structural component of the respective tool carrier system (30, 40) located closest to the respectively other tool carrier system (40, 30).

4. Lathe as defined in any one of the preceding claims, **characterized in that** the X slide (72, 82) of each of the slide systems (32, 72; 42, 82) extends beyond a Z slide (32, 42) guiding this X slide (72, 82) in the direction of the respectively other tool carrier system (40, 30).

5. Lathe as defined in any one of the preceding claims, **characterized in that** the Z slide (32, 42) has X guides (70, 80) arranged on a slide member (50, 60) thereof such that they are located closer to the respectively other tool carrier system (40, 30) than the respective slide member (50, 60).

6. Lathe as defined in any one of the preceding claims, **characterized in that** the slide systems (32, 72; 42, 82) of the tool carrier systems (30, 40) are movable in the Z direction on a collision-prone path.

7. Lathe as defined in claim 6, **characterized in that** the slide systems (32, 72; 42, 82) are movable in Z direction on the same guides (24).

8. Lathe as defined in any one of the preceding claims, **characterized in that** the tool carrier heads (114, 124) are aligned in the first position such that their tool receptacles (116, 126) allow use of tools (134, 144) extending in an area (E₃, E₄) extending transversely to the spindle axis (20) at a point of intersection with the spindle axis (20).

9. Lathe as defined in claim 8, **characterized in that** the areas (E₃, E₄) extending transversely to the spindle axis (20) extend approximately parallel to one another at the point of intersection with the spindle axis (20).

10. Lathe as defined in any one of the preceding claims, **characterized in that** the tool carrier head (114, 124) is arranged in the first position relative to the slide system (32, 72; 42, 82) supporting it such that the slide system (32, 72; 42, 82) forms a free space for tools (134, 144) extending away from the tool carrier head (114, 124) approximately in a direction transverse to the spindle axis (20).

11. Lathe as defined in any one of the preceding claims, **characterized in that** at least one of the tool carrier heads (114, 124) is positionable in the first position relative to the slide system (32, 72; 42, 82) supporting it such that it projects beyond a side surface (132, 142) of the slide system (32, 72; 42, 82) located closest to the respectively other tool carrier system (40; 30) in the direction of the other tool carrier system (40; 30).

12. Lathe as defined in claim 11, **characterized in that** both tool carrier heads (114, 124) are positionable relative to the slide system (32, 72; 42, 82) supporting them such that they project beyond a side surface (132, 142) of the slide system (32, 72; 42, 82) located closest to the respectively other tool carrier system (40; 30) in the direction of the other tool carrier system (40, 30).

13. Lathe as defined in any one of the preceding claims, **characterized in that** a counterspindle (158) arranged so as to be located opposite the spindle (18) is provided on the machine frame (10).

14. Lathe as defined in claim 13, **characterized in that** the spindle (18) and the counterspindle (158) are movable towards one another for the transfer of workpieces (W1, W2).

15. Lathe as defined in any one of the preceding claims, **characterized in that** at least one of the tool carrier heads (114, 124) is located in a second position relative to the slide system (32, 72; 42, 82) supporting it on a side of the tool carrier (100, 110) facing away from the other tool carrier system (40; 30).

16. Lathe as defined in claim 13, **characterized in that** in the area of the tool carrier head (114, 124) the slide system (32, 72; 42, 82) forms a free space (172, 182) for tools extending approximately in the direction of the spindle axis (20).

17. Lathe as defined in claim 15 or 16, **characterized in that** in the second position the tool carrier head (114, 124) is located in front of a side of the slide system (32, 72; 42, 82) facing towards the side of the corresponding spindle.

18. Lathe as defined in any one of claims 13 to 17, **characterized in that** the tool carrier (100, 110) is movable relative to the X slide (72, 82) such that the tool carrier head (114, 124) is adapted to be brought from the first position into the second position.

19. Lathe as defined in any one of claims 13 to 18, **characterized in that** the tool carrier head (114, 124) is adapted to be brought from the first position into the second position by way of a pivoting movement.

20. Lathe as defined in claim 19, **characterized in that** the tool carrier (100, 110) is mounted on the X slide (72, 82) so as to be pivotable about an axis (98, 108).

21. Lathe as defined in any one of the preceding claims, **characterized in that** the tool carrier is designed as a tool turret (100, 110).

22. Lathe as defined in claim 21, **characterized in that** each tool turret (100, 110) has a turret head (114, 124) arranged on one side of a turret housing (96, 106).

23. Lathe as defined in claim 22, **characterized in that** each turret head (114, 124) is pivotable about a turret axis (112, 122) in relation to the turret housing (96, 106), said axis extending transversely to an X axis of the machine tool.

24. Lathe as defined in claim 23, **characterized in that** the turret axis (112, 124) extends approximately parallel to the Z axis.

25. Lathe as defined in any one of claims 21 to 24, **characterized in that** the turret housing (96, 106) is pivotable about a pivot axis (98, 108) in relation to the X slide (72, 82).

26. Lathe as defined in claim 25, **characterized in that** the turret head (114, 124) is adapted to be brought from the first position facing the other tool carrier system (40; 30) into the second position facing away from the other tool carrier system (40; 30) by way of pivoting of the turret housing (96, 106) about the pivot axis (98, 108).

## Revendications

1. Tour comportant un bâti de machine (10), au moins une broche porte-pièce (18) disposée au niveau du bâti de machine (10) et rotative autour d'un axe de broche (20), deux systèmes de support d'outils (30, 40) mobiles par rapport au bâti de machine (10) dans une direction Z parallèlement à l'axe de broche (20) et comportant des supports d'outils pour plusieurs outils, lesquels systèmes sont disposés sur le même côté de l'axe de broche (20) et, parmi lesquels, indépendamment de l'autre système de support d'outils (40, 30), chacun est guidé respectivement avec son propre système de coulisse (32, 72 ; 42, 82) au niveau du bâti de machine (10) dans la direction Z de manière mobile sur une trajectoire qui s'étend par rapport à l'autre système de support d'outils (40, 30) de façon à être source de collision **caractérisé en ce que** chaque système de coulisse (32, 72 ; 42, 82) comprend une coulisse X (72, 82) guidée à la coulisse Z (32, 42), laquelle coulisse X est disposée sur un côté de la coulisse Z (32 ; 42) faisant face à respectivement l'autre système de support d'outils (40 ; 30) et **en ce qu'**un plan de guidage (E₁, E₂), dans lequel se trouvent les systèmes de guidage de coulisse X pour le déplacement de la coulisse X (72, 82) par rapport à la coulisse Z (32, 42), s'étend de manière transversale par rapport à l'axe de broche (20).

2. Tour selon la revendication 1, **caractérisé en ce que** le plan de guidage (E₁, E₂) se trouve sur un côté, faisant face à respectivement l'autre système de support d'outils (40 ; 30), d'un élément de guidage (38 ; 48) de la coulisse Z (32, 42) adjacent à respectivement l'autre système de support d'outils (40 ; 30).

3. Tour selon l'une quelconque des revendications précédentes, **caractérisé en ce que** chaque système de support d'outils (30, 40) comprend une tête de support d'outils (114 ; 124), laquelle est mobile par rapport au système de coulisse (32, 72 ; 42, 82) respectif et peut par conséquent être positionnée dans une première position de sorte que celle-ci constitue l'assemblage du système de support d'outils (30, 40) respectif, adjacent à respectivement l'autre système de support d'outils (40, 30).

4. Tour selon l'une quelconque des revendications précédentes, **caractérisé en ce que** la coulisse X (72, 82) de chacun des systèmes de coulisse (32, 72 ; 42, 82) s'étend au-delà d'une coulisse Z (32, 42) guidant cette coulisse X (72, 82) dans la direction de respectivement l'autre système de support d'outils (40, 30).

5. Tour selon l'une quelconque des revendications précédentes, **caractérisé en ce que** la coulisse Z (32, 42) comprend des systèmes de guidage de coulisse X (70, 80), lesquels sont disposés au niveau d'un corps de coulisse (50, 60) de cette même coulisse Z de sorte que ceux-ci se situent plus près de respectivement l'autre système de support d'outils (40, 30) que le corps de coulisse (50, 60) respectif.

6. Tour selon l'une quelconque des revendications précédentes, **caractérisé en ce que** les systèmes de coulisse (32, 72 ; 42, 82) des systèmes de support d'outils (30, 40) sont mobiles dans la direction Z sur une trajectoire qui est source de collision.

7. Tour selon la revendication 6, **caractérisé en ce que** les systèmes de coulisse (32, 72 ; 42, 82) sont mobiles dans la direction Z sur les mêmes systèmes de guidage (24).

8. Tour selon l'une quelconque des revendications précédentes, **caractérisé en ce que** les têtes de support d'outils (114, 124) sont alignées dans la première position de sorte que leurs logements d'outils (116, 126) permettent d'utiliser des outils (134, 144) qui se rangent dans un plan (E₃, E₄) s'étendant de manière transversale par rapport à l'axe de broche (20) en un point d'intersection avec l'axe de broche (20).

9. Tour selon la revendication 8, **caractérisé en ce que** les plans (E₃, E₄) s'étendant de manière transversale par rapport à l'axe de broche (20) s'alignent de manière approximativement parallèle l'un par rapport à l'autre en un point d'intersection avec l'axe de broche (20).

10. Tour selon l'une quelconque des revendications précédentes, **caractérisé en ce que** la tête de support d'outils (114, 124) est disposée, par rapport au système de coulisse (32, 72 ; 42, 82) qui la porte, dans la première position de sorte que le système de coulisse (32, 72 ; 42, 82) forme un espace libre pour les outils (134, 144) s'étendant approximativement dans la direction transversale par rapport à l'axe de broche (20) depuis la tête de support d'outils (114, 124).

11. Tour selon l'une quelconque des revendications précédentes, **caractérisé en ce qu'**au moins une des têtes de support d'outils (114, 124) peut être positionnée, par rapport au système de coulisse (32, 72 ; 42, 82) qui la porte, dans la première position de sorte que celle-ci se trouve en saillie dans la direction de l'autre système de support d'outils (40 ; 30), au-delà d'une surface latérale (132, 142) du système de coulisse (32, 72 ; 42, 82) adjacente à respectivement l'autre système de support d'outils (40 ; 30).

12. Tour selon la revendication 11, **caractérisé en ce que** les deux têtes de support d'outils (114, 124) peuvent être positionnées par rapport aux systèmes de coulisse (32, 72 ; 42, 82) qui les portent de sorte que celles-ci se trouvent en saillie dans la direction de l'autre système de support d'outils (40 ; 30), au-delà d'une surface latérale (132, 142) du système de coulisse (32, 72 ; 42, 82) adjacente à respectivement l'autre système de support d'outils (40 ; 30).

13. Tour selon l'une quelconque des revendications précédentes, **caractérisé en ce que**, au niveau du bâti de machine (10), est prévue une contre-broche (158) disposée à l'opposé de la broche (18).

14. Tour selon la revendication 13, **caractérisé en ce que** la broche (18) et la contre-broche (158) sont mobiles l'une vers l'autre pour la réception d'outils (W1, W2).

15. Tour selon l'une quelconque des revendications précédentes, **caractérisé en ce qu'**au moins l'une des têtes de support d'outils (114, 124) se dresse par rapport au système de coulisse (32, 72 ; 42, 82) qui la porte dans une seconde position sur un côté du support d'outils (100, 110) détourné de l'autre système de support d'outils (40, 30).

16. Tour selon la revendication 13, **caractérisé en ce que** le système de coulisse (32, 72 ; 42, 82), dans la zone de la tête de support d'outils (114, 124) forme un espace libre (172, 182) pour les outils s'étendant approximativement dans la direction de l'axe de broche (20).

17. Tour selon la revendication 15 ou 16, **caractérisé en ce que**, dans la seconde position, la tête de support d'outils (114, 124) se trouve devant un côté du système de coulisse (32, 72 ; 42, 82) tourné face au côté de la broche correspondante.

18. Tour selon l'une quelconque des revendications 13 à 17, **caractérisé en ce que** le support d'outils (100, 110) est mobile par rapport à la coulisse X (72, 82) de sorte que la tête de support d'outils (114, 124) puisse passer de la première position à la seconde position.

19. Tour selon l'une quelconque des revendications 13 à 18, **caractérisé en ce que** la tête de support d'outils (114, 124) peut passer de la première position à la seconde position à l'aide d'un mouvement de pivotement.

20. Tour selon la revendication 19, **caractérisé en ce que** le support d'outils (100, 110) est installé au niveau de la coulisse X (72, 82) de manière pivotante autour d'un axe (98, 108).

21. Tour selon l'une quelconque des revendications précédentes, **caractérisé en ce que** le support d'outils est réalisé comme un revolver d'outils (100, 110).

22. Tour selon la revendication 21, **caractérisé en ce que** chaque revolver d'outils (100, 110) comprend une tête de revolver (114, 124), laquelle est disposée sur un côté d'un logement de revolver (96, 106).

23. Tour selon la revendication 22, **caractérisé en ce que** chaque tête de revolver (114, 124) peut pivoter par rapport au logement de revolver (96, 106) autour d'un axe de revolver (112, 122) qui s'étend de manière transversale par rapport à un axe X de la machine-outil.

24. Tour selon la revendication 23, **caractérisé en ce que** l'axe de revolver (112, 122) s'étend approximativement de manière parallèle à l'axe Z.

25. Tour selon l'une quelconque des revendications 21 à 24, **caractérisé en ce que** le logement de revolver (96, 106) peut pivoter autour d'un axe de pivotement (98, 108) par rapport à la coulisse X (72, 82).

26. Tour selon la revendication 25, **caractérisé en ce que** la tête de revolver (114, 124) peut passer de la première position faisant face à l'autre système de support d'outils (40 ; 30) à la seconde position détournée de l'autre système de support d'outils (40 ; 30) par le pivotement du logement de revolver (96, 106) autour de l'axe de pivotement (98, 108).
